# EUROPEAN PATENT SPECIFICATION

(11) **EP 2 560 349 B1**
(45) Date of publication and mention of the grant of the patent: **24.12.2014**
(21) Application number: 10849718.1
(22) Date of filing: 24.08.2010
(51) Int. Cl.: H04M 1/60

(54) **METHOD AND APPARATUS FOR SWITCHING AUDIO CHANNELS OF A COMMUNICATION MODULE**
VERFAHREN UND VORRICHTUNG ZUM SCHALTEN VON AUDIOKANÄLEN EINES KOMMUNIKATIONSMODULS
PROCÉDÉ ET APPAREIL POUR COMMUTER DES CANAUX AUDIO D'UN MODULE DE COMMUNICATION

(30) Priority: 12.04.2010 CN 201010144405
(43) Date of publication of application: 20.02.2013
(73) Proprietor: ZTE Corporation, Shenzhen, Guangdong 518057 (CN)
(72) Inventor: LUO, Zushun, Shenzhen Guangdong 518057 (CN)
(74) Representative: Office Freylinger
(86) International application number: PCT/CN2010/076311
(87) International publication number: WO 2011/127709

(56) References cited:
- CN-A- 1 753 316
- CN-A- 101 039 395
- CN-Y- 201 336 727
- US-A1- 2002 110 246
- US-A1- 2006 083 388

## Description

### Field of the Invention

The disclosure relates to the mobile communication technology, in particular to a method and an apparatus for switching audio channels of a communication module.

### Background of the Invention

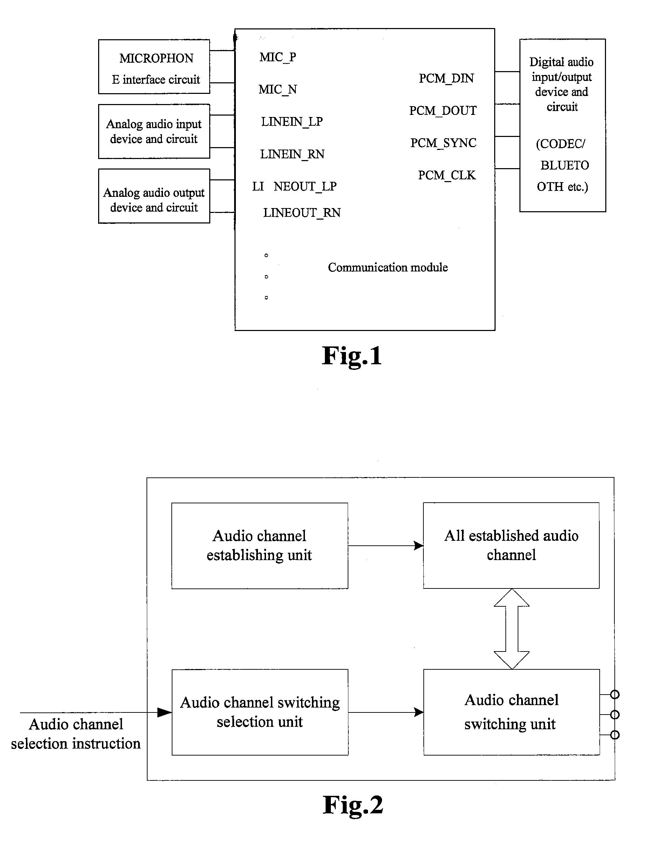

With the development of technologies and market, a communication module is applied in more and more fields, including smart phones, wireless network cards, laptops, Mobile Internet Devices (MID) and other consumer electronic products which require the function of wireless communication. Many of these products with embedded the communication module are required to have the function of voice communication, wherein the communication modules are sometimes required to provide analog audio signals or digital signals. In order to meet the requirements of different application occasions, the current communication module provides a great number of audio interfaces which can be selected and used, e.g. analog audio interfaces such as MIC, LINEIN, LINEOUT and HEADPHONE, and digital interfaces such as PCM and I²S etc. As shown in Fig. 1, there can be many audio input/output combinations because there are many interfaces. However, only one input/output combination is generally used during the actual application of the product. The communication modules, which are all embedded in a certain product and do not have User Interfaces (UIs), provide more audio interfaces, and more audio channels. In addition, different types of module audio interface signals are required during the applications of different products, e.g. single-ended differential signals are required to be output by the LINEOUT and input by the LINEIN during the applications of some products, while stereo signals are required during the applications of other products, which results in a plurality of audio input/output combinations during the product applications. Since the conventional communication module does not have Uls and can not regulate the audio channels dynamically, therefore, it fails to adapt to the audio input/output combinations in different products.

D1 (US 2006/083388 A1) relates to "SYSTEM AND METHOD FOR SELECTIVELY SWITCHING BETWEEN A PLURALITY OF AUDIO CHANNELS".

### Summary of the Invention

The disclosure provides an apparatus for switching audio channels of a communication module according to external switching instructions.

The disclosure also provides a method for switching audio channels of a communication module according to external switching instructions.

According to the first aspect of the disclosure, an apparatus for switching audio channels of a communication module is provided by the disclosure, wherein the communication module is provided with more than one audio interface to be connected to external audio devices. The apparatus comprises: an audio channel establishing unit, an audio channel switching selection unit and an audio channel switching unit, wherein
the audio channel establishing unit is configured to establish one-to-one corresponding audio channels for signal type combinations of all audio interfaces of the communication module;
the audio channel switching selection unit is configured to receive external audio channel switching instructions, and to select the audio channels which are to be switched according to the audio channel switching instructions; and
the audio channel switching unit is configured to switch the selected audio channels, which are to be switched, to corresponding audio interfaces of the communication module.

In the apparatus, the audio channel establishing unit is further configured to set a channel identifier used for switching for each established audio channel.

In the apparatus, the audio channel switching unit is provided with channel switching switches corresponding to the channel identifiers respectively, and each channel switching switch is connected between the corresponding audio channel and audio interface.

In the apparatus, the audio channel switching instructions are from an external Application Processor (AP), and channel switching identifiers used for switching the audio channels are carried in the audio channel switching instructions.

In the apparatus, the audio channel switching selection unit is configured to select the audio channels which are to be switched, or select the channel identifiers of the audio channels according to the channel switching identifiers carried in the audio channel switch instructions.

According to the second aspect of the disclosure, a method for switching audio channels of a communication module is provided by the disclosure, wherein the communication module is provided with more than one audio interface to be connected to external audio devices. The method comprises the following steps of:
establishing one-to-one corresponding audio channels for signal type combinations of all audio interfaces of the communication module;
receiving external audio channel switching instructions, and selecting the audio channels which are to be switched according to the audio channel switch instructions; and
switching the selected audio channels, which are to be switched, to corresponding audio interfaces of the communication module.

The method of the disclosure further comprises the step of setting a channel identifier used for switching for each established audio channel.

In the method of the disclosure, a channel switching switch corresponding to each audio channel identifier is set between each audio channel and the corresponding audio interface.

In the method of the disclosure, the audio channel switching instructions are from an external AP, and channel switching identifiers used for switching the audio channels are carried in the audio channel switch instructions,.

In the above steps, the audio channels which are to be switched, or the channel identifiers of the audio channels are selected by utilizing the channel switching identifiers carried in the audio channel switching instructions.

The technical effect of the disclosure is that, the communication module can be adapted to various signal type combinations of different products; i.e., the communication module can select appropriate audio channels according to audio input/output types of different products, thus the applicability of the communication module is improved enormously.

### Brief Description of the Drawings

Fig. 1 shows a schematic diagram of a common communication module with analog digital audio interfaces;
Fig. 2 shows a structural schematic diagram of an apparatus for switching audio channels of a communication module of the disclosure;
Fig. 3 shows a schematic flowchart of a method for switching audio channels of a communication module of the disclosure;
Fig. 4 shows a call process flowchart of selecting the corresponding audio channels by applying the method of the disclosure.

### Detailed Description of the Embodiments

The specific embodiments of the technical solution of the disclosure are described below in details with reference to the accompanying drawings.
the communication module involved in the disclosure is provided with a plurality of audio interfaces, e.g. analog audio interfaces such as MIC_P/MIC_N, LINEIN_LP/LINEIN_RN, and LINEOUT_LP/LINEOUT_RN etc. and digital audio interfaces such as PCM_DIN/PCM_DOUT/PCM_SYNC/PCM_CLK etc. shown in Fig. 1. In addition, other audio interfaces can be included, e.g. a pair of MIC differential signals MIC2_P/MIC2_N, earphone and headphone EAR_P/EAR_N, and HEADPHONE_LP/HEADPHONE_RN etc.

Certain audio interfaces of the communication module above, e.g. each of digital audio interfaces PCM_DIN/PCM_DOUT/PCM_SYNC/PCM_CLK can have 3 signal type combinations which include the 8-bit U-law format, the 8-bit A-law format and the 16-bit linear format, and each of the analog audio interfaces LINEIN_LP/LINEIN_RN, LINEOUT_LP/LINEOUT_RN can have 2 signal type combinations which include stereo signals and differential signals. This means that, it needs to establish 3 audio channels for the signal type combinations of each audio port for the PCM to meet the requirements of practical use, and 2 audio channels are needed for the signal type combinations of the LINEIN interface or the LINEOUT interface.

In order to make the communication module meet the requirements of various signal type combinations, the disclosure provides an apparatus as shown in Fig. 2 for switching audio channels of a communication module. The apparatus is set in the communication module so that audio channels adapted to different audio signal combinations can be established in the communication module, and then the required audio channels can be selected and connected according to practical requirements, i.e., the required audio channels can be switched to the audio interfaces corresponding to the audio signals.

It needs to be noted that, the audio signals of the disclosure are corresponding to the audio interfaces configured to receive/send the audio signals in the communication module. The types of the audio signals of the disclosure are not only corresponding to the audio interfaces configured to receive/send the audio signals but also corresponding to the types or formats of the signals which pass through the audio interfaces.

As shown in Fig. 2, the apparatus for switching audio channels of a communication module of the disclosure comprises: an audio channel establishing unit, an audio channel switching selection unit and an audio channel switching unit, wherein
the audio channel establishing unit is configured to establish audio channels for signal type combinations of all audio interfaces of the communication module respectively, e.g. establish audio channels with the 8-bit U-law format, 8-bit A-law format and 16-bit linear format for 3 signal type combinations of each of the digital audio interfaces PCM_DIN/PCM_DOUT/PCM_SYNC/PCM_CLKPCM;
the audio channel switching selection unit is configured to receive external audio channel switching instructions, and to select the audio channels which are to be switched according to the audio channel switching instructions, wherein the audio channel switching instructions are from outside, and configured to select the audio channels, which are to be used, from the established audio channels of the communication module, such as selecting the audio channel with the 8-bit U-law format used for the PCM signals;
the audio channel switching unit is configured to switch the selected audio channels, which are to be switched, to the corresponding audio interfaces of the communication module, e.g. the audio channel with the 8-bit U-law format is switched to the PCM interface of the communication module.

In order to control the established audio channels, the audio channel establishing unit is further configured to set a channel identifier used for switching for each established audio channel, thus the switching of the corresponding audio channels can be controlled by the channel identifiers.

The audio channel switching selection unit is configured to receive the audio channel switching instructions from an external AP, and to obtain the channel switching identifiers, which are used for selecting the audio channels to be switched in the communication module, carried in the instructions by analyzing the audio channel switching instructions, such as the first audio channel switching identifier CHANNEL-1 used for switching the first audio channel, and then to select corresponding channel identifier by utilizing the audio channel switching identifier, such as the channel identifier channel-1 of the first audio channel, and thereby the audio channel which is to be switched is selected.

The audio channel switching unit is provided with a plurality of channel switching switches, and each of channel switching switches is connected between the corresponding audio channel and audio interface. The audio channel switching unit is configured to control the operations of these channel switching switches according to the channel identifiers selected by the audio channel switching selection unit, e.g. the audio channel switching unit controls the switching of the switching switch of the first audio channel according to the first audio channel identifier channel-1.

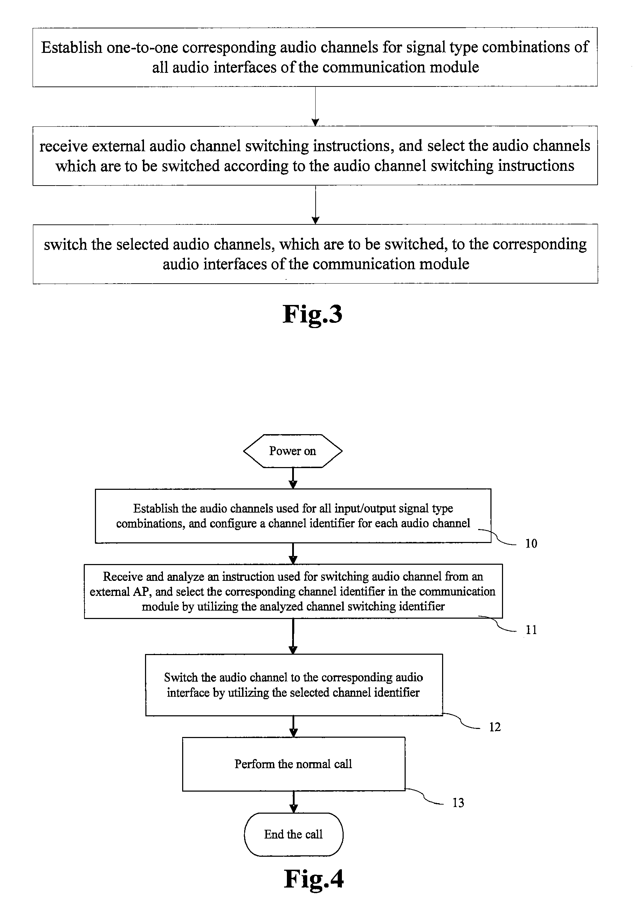

Fig. 3 shows a method for switching audio channels of a communication module of the disclosure, wherein the communication module is provided with more than one audio interface to be connected to external audio devices. The method comprises the following steps:
establishing one-to-one corresponding audio channels for signal type combinations of all audio interfaces of the communication module, which process is preferably executed during the initialization phase;
receiving external audio channel switching instructions, and selecting the audio channels which are to be switched according to the audio channel switching instructions; and
switching the selected audio channels, which are to be switched, to the corresponding audio interfaces of the communication module.

Fig. 4 shows a call process of selecting the corresponding audio channels by applying the above method of the disclosure.

Step 10: during the power-on initialization of the communication module, the establishment and configuration of the audio channels corresponding to all input/output signal type combinations are executed by software at the module side, wherein each input/output interface combination is corresponding to one audio device. Specifically, for the PCM signals, audio channels with three formats, i.e. the 8-bit U-law format, the 8-bit A-law format and the 16-bit linear format etc., are established according to the configuration situation of the external CODEC, in addition, the gain value of the volume indicator of audio call mode is set as medium. For the LINEIN and LINEOUT signals, they are also configured into stereo signals or single-ended differential signals according to the external CODEC or other application situations, and different audio channels adapted to both signals are established, at the same time, the gain value of the volume indicator of each combination is set to a proper number. For other interface signals, the configuration of audio channels is similarly executed more or less according to the actual situation and application situation of the interfaces. By this method, the audio channels of each audio device are established for all audio interfaces of the communication module during the power-on initialization. Moreover, the corresponding channel identifiers are configured for all audio channels, wherein each channel identifier is corresponding to an audio channel which is to be connected to an external audio device.

Step 11: an instruction used for switching audio channel is received from an external AP, the channel switching identifier in the AT instruction is analyzed, and the corresponding channel identifier in the communication module is selected according to the analyzed channel switching identifier.

Step 12: the switching of the corresponding audio channel is performed according to the channel identifier selected in Step 11, i.e., the audio channel corresponding to the selected channel identifier is switched to the corresponding audio interface of the communication module.

Step 13: the call is performed normally in the switched audio channels.

Specific examples of configuring channel identifiers for the established audio channels and switching audio channels by utilizing the channel identifiers are explained below.

The identifiers of the established audio channels are realized by the software of the communication module of the disclosure providing an audio device enumeration snd_device_type which is realized by the bottom layer for the application layer. The enumeration comprises the audio channels corresponding to all possible audio input/output combinations, and each enumeration item, such as each channel identifier, is corresponding to an input/output combination.

Furthermore, in order to perform the switching of audio channels of the communication module by using the external channel switching instructions, an AT instruction AT^AUDSWITH=<CHANNEL> corresponding to the end of audio channel switching instruction is extended by the communication module, so as to select the audio channels to be switched according to the external channel switching instruction, i.e., the AT instruction, wherein the parameter CHANNEL is an audio channel identifier, which is also an enumeration form and is recorded as aud_device_type, and each enumeration item is that each channel identifier is corresponding to an audio channel which is corresponding to the same audio channel in the snd_device_type. When an external channel switch instruction is received, the communication module judges the value of the snd_device_type at the beginning of the AT response functions in the calling and the called, and then according to the value, selects the audio device enumeration snd_device_type, i.e., the channel identifier, thus the switching of the audio channel corresponding to the channel identifier is controlled.

### Industrial applicability

By the disclosure, audio channels which can be adapted to different audio signal combinations are established in the communication module, and the required audio channel can be selected and connected according to actual requirement, i.e., the required audio channel is switched to the audio interface corresponding to the audio signal, which can make the communication module select the appropriate audio channel according to audio input/output types of different products, thus the applicability of the communication module is improved enormously.

What are described above are detailed description of the disclosure, however, they are not to limit the disclosure. For those skilled in the art, there may be various modifications according to the principles of the disclosure. Therefore, all modifications made according to the principles of the disclosure shall fall within the scope defined in claims of the disclosure.

## Claims

1. An apparatus for switching audio channels of a communication module, wherein the communication module is provided with more than one audio interface to be connected to external audio devices, **characterized by** comprising: an audio channel establishing unit, an audio channel switching selection unit and an audio channel switching unit, wherein
the audio channel establishing unit is configured to establish audio channels for signal type combinations of all audio interfaces of the communication module respectively;
the audio channel switching selection unit is configured to receive external audio channel switching instructions, and to select the audio channels which are to be switched according to the audio channel switching instructions; and
the audio channel switching unit is configured to switch the selected audio channels, which are to be switched, to corresponding audio interfaces of the communication module.

2. The apparatus according to Claim 1, **characterized in that** the audio channel establishing unit is further configured to set a channel identifier used for switching for each established audio channel.

3. The apparatus according to Claim 2, **characterized in that** the audio channel switching unit is provided with channel switching switches corresponding to the channel identifiers respectively, and each channel switching switch is connected between the corresponding audio channel and audio interface.

4. The apparatus according to Claim 3, **characterized in that** the audio channel switching instructions are from an external Application Processor (AP), and channel switching identifiers used for switching the audio channels are carried in the audio channel switching instructions.

5. The apparatus according to Claim 4, **characterized in that** the audio channel switching selection unit is configured to select the audio channels which are to be switched according to the channel switching identifiers carried in the audio channel switching instructions.

6. A method for switching audio channels of a communication module, wherein the communication module is provided with more than one audio interface to be connected to external audio devices, **characterized by** comprising the following steps of:
establishing audio channels for signal type combinations of all audio interfaces of the communication module respectively (10);
receiving external audio channel switching instructions, and selecting the audio channels which are to be switched according to the audio channel switching instructions (11); and
switching the selected audio channels, which are to be switched, to corresponding audio interfaces of the communication module (12).

7. The method according to Claim 6, **characterized in that** the method further comprises the step of: setting a channel identifier used for switching for each established audio channel (10).

8. The method according to Claim 7, **characterized in that** the method further comprises the step of: setting a channel switching switch corresponding to each audio channel identifier between each audio channel and the corresponding audio interface.

9. The method according to Claim 8, **characterized in that** the audio channel switching instructions are from an external Application Processor (AP), and channel switching identifiers used for switching the audio channels are carried in the audio channel switching instructions.

10. The method according to Claim 9, **characterized in that** the method further comprises the step of: selecting the audio channels which are to be switched from the established audio channels by utilizing the channel switching identifiers carried in the audio channel switching instructions (11).

## Patentansprüche

1. Vorrichtung zum Schalten von Audiokanälen eines Kommunikationsmoduls, wobei das Kommunikationsmodul mit mehr als einer Audioschnittstelle zum Anschluss an externe Audioeinrichtungen versehen ist, **dadurch gekennzeichnet, dass** die Vorrichtung umfasst:
eine einen Audiokanal einrichtende Einheit, eine einen Audiokanal schaltende Auswahleinheit und eine Audiokanal-Schalteinheit, wobei
die den Audiokanal einrichtende Einheit dafür konfiguriert ist, Audiokanäle für Signalkombinationen jeweils aller Audioschnittstellen des Kommunikationsmoduls einzurichten;
die den Audiokanal schaltende Auswahleinheit dafür konfiguriert ist, externe Audiokanal-Schaltbefehle zu empfangen und die Audiokanäle auszuwählen, die gemäß den Audiokanal-Schaltbefehlen zu schalten sind; und
die Audiokanal-Schalteinheit dafür konfiguriert ist, die ausgewählten zu schaltenden Audiokanäle auf entsprechende Audioschnittstellen des Kommunikationsmoduls zu schalten.

2. Vorrichtung nach Anspruch 1, **dadurch gekennzeichnet, dass** die den Audiokanal einrichtende Einheit ferner dafür konfiguriert ist, einen Kanal-Identifikator zu setzen, der zum Schalten für jeden eingerichteten Audiokanal verwendet wird.

3. Vorrichtung nach Anspruch 2, **dadurch gekennzeichnet, dass** die Audiokanal-Schalteinheit mit den Kanal schaltenden Schaltern entsprechend den jeweiligen Kanal-Identifikatoren versehen ist und jeder den Kanal schaltende Schalter zwischen dem entsprechenden Audiokanal und der Audioschnittstelle angeschlossen ist.

4. Vorrichtung nach Anspruch 3, **dadurch gekennzeichnet, dass** die Audiokanal-Schaltbefehle von einem externen Anwendungsprozessor (Application Processor, AP) kommen und Kanalschalt-Identifikatoren, die für das Schalten der Audiokanäle verwendet werden, in den Audiokanal-Schaltbefehlen geführt werden.

5. Vorrichtung nach Anspruch 4, **dadurch gekennzeichnet, dass** die den Audiokanal schaltende Auswahleinheit dafür konfiguriert ist, die Audiokanäle auszuwählen, die gemäß den Kanalschalt-Identifikatoren, die in den Audiokanal-Schaltbefehlen geführt werden, zu schalten sind.

6. Verfahren zum Schalten von Audiokanälen eines Kommunikationsmoduls, wobei das Kommunikationsmodul mit mehr als einer Audioschnittstelle zum Anschluss an externe Audiovorrichtungen versehen ist, **dadurch gekennzeichnet, dass** es folgende Schritte umfasst:
Einrichten von Audiokanälen für Signalkombinationen jeweils aller Audioschnittstellen des Kommunikationsmoduls (10);
Empfangen von externen Audiokanal-Schaltbefehlen und Auswählen der Audiokanäle, die gemäß den Audiokanal-Schaltbefehlen (11) zu schalten sind; und
Schalten der ausgewählten zu schaltenden Audiokanäle auf entsprechende Audioschnittstellen des Kommunikationsmoduls (12).

7. Verfahren nach Anspruch 6, **dadurch gekennzeichnet, dass** das Verfahren ferner den folgenden Schritt umfasst: Setzen eines Kanal-Identifikators, der zum Schalten für jeden eingerichteten Audiokanal (10) verwendet wird.

8. Verfahren nach Anspruch 7, **dadurch gekennzeichnet, dass** das Verfahren ferner den folgenden Schritt umfasst: Setzen eines den Kanal schaltenden Schalters entsprechend jedem Audiokanal-Identifikator zwischen jedem Audiokanal und der entsprechenden Audioschnittstelle.

9. Verfahren nach Anspruch 8, **dadurch gekennzeichnet, dass** die Audiokanal-Schaltbefehle von einem externen Anwendungsprozessor (Application Processor, AP) kommen und die für das Schalten der Audiokanäle verwendeten Kanalschalt-Identifikatoren in den Audiokanal-Schaltbefehlen geführt werden.

10. Verfahren nach Anspruch 9, **dadurch gekennzeichnet, dass** das Verfahren ferner den folgenden Schritt umfasst: Auswählen der zu schaltenden Audiokanäle aus den eingerichteten Audiokanälen unter Nutzung der Kanalschalt-Identifikatoren, die in den Audiokanal-Schaltbefehlen (11) geführt werden.

## Revendications

1. Appareil pour commuter des canaux audio d'un module de communication, dans lequel le module de communication est doté de plus d'une interface audio devant être connectée à des dispositifs audio externes, **caractérisé par** le fait de comprendre : une unité d'établissement de canaux audio, une unité de sélection de commutation de canaux audio et une unité de commutation de canaux audio, dans lequel
l'unité d'établissement de canaux audio est configurée pour établir des canaux audio pour des combinaisons de type de signal de toutes les interfaces audio du module de communication, respectivement ;
l'unité de sélection de commutation de canaux audio est configurée pour recevoir des instructions de commutation de canaux audio externes, et pour sélectionner les canaux audio qui doivent être commutés en fonction des instructions de commutation de canaux audio ; et
l'unité de commutation de canaux audio est configurée pour commuter les canaux audio sélectionnés, qui doivent être commutés, sur des interfaces audio correspondantes du module de communication.

2. Appareil selon la revendication 1, **caractérisé en ce que** l'unité d'établissement de canaux audio est configurée en outre pour définir un identificateur de canal utilisé pour la commutation pour chaque canal audio établi.

3. Appareil selon la revendication 2, **caractérisé en ce que** l'unité de commutation de canaux audio est dotée de commutateurs de commutation de canaux correspondant aux identificateurs de canaux, respectivement, et chaque commutateur de commutation de canal est connecté entre le canal audio et l'interface audio correspondants.

4. Appareil selon la revendication 3, **caractérisé en ce que** les instructions de commutation de canaux audio proviennent d'un processeur d'application (AP) externe, et les identificateurs de commutation de canaux utilisés pour commuter les canaux audio sont transportés dans les instructions de commutation de canaux audio.

5. Appareil selon la revendication 4, **caractérisé en ce que** l'unité de sélection de commutation de canaux audio est configurée pour sélectionner les canaux audio qui doivent être commutés en fonction des identificateurs de commutation de canaux transportés dans les instructions de commutation de canaux audio.

6. Procédé pour commuter des canaux audio d'un module de communication, dans lequel le module de communication est doté de plus d'une interface audio devant être connectée à des dispositifs audio externes, **caractérisé par** le fait de comprendre les étapes suivantes consistant à :
- établir des canaux audio pour des combinaisons de type de signal de toutes les interfaces audio du module de communication respectivement (10) ;
- recevoir des instructions de commutation de canaux audio externes, et sélectionner les canaux audio qui doivent être commutés en fonction des instructions de commutation de canaux audio (11) ; et
- commuter les canaux audio sélectionnés, qui doivent être commutés, sur des interfaces audio correspondantes du module de communication (12).

7. Procédé selon la revendication 6, **caractérisé en ce que** le procédé comprend en outre l'étape consistant à : définir un identificateur de canal utilisé pour la commutation pour chaque canal audio établi (10).

8. Procédé selon la revendication 7, **caractérisé en ce que** le procédé comprend en outre l'étape consistant à : établir un commutateur de commutation de canal correspondant à chaque identificateur de canal audio entre chaque canal audio et l'interface audio correspondante.

9. Procédé selon la revendication 8, **caractérisé en ce que** les instructions de commutation de canaux audio proviennent d'un processeur d'application (AP) externe, et les identificateurs de commutation de canaux utilisés pour commuter les canaux audio sont transportés dans les instructions de commutation de canaux audio.

10. Procédé selon la revendication 9, **caractérisé en ce que** le procédé comprend en outre l'étape consistant à : sélectionner les canaux audio qui doivent être commutés parmi les canaux audio établis en utilisant les identificateurs de commutation de canaux transportés dans les instructions de commutation de canaux audio (11).
